Europäisches Patentamt

European Patent Office

Office européen des brevets

Publication number: **0 284 742**

**A2**

# EUROPEAN PATENT APPLICATION

Application number: 88101853.5

Int. Cl.⁴ **G06F 3/023 , G06F 3/02**

Date of filing: 09.02.88

Priority: 31.03.87 US 32793

Date of publication of application:
05.10.88 Bulletin 88/40

Designated Contracting States:
DE FR GB IT

Applicant: **International Business Machines
Corporation
Old Orchard Road
Armonk, N.Y. 10504(US)**

Inventor: **Hays, Douglas Earl
1413 Jocasta Drive
Lexington Kentucky 40502(US)**
Inventor: **Higdon, John Michael
4157 Forsythe Drive
Lexington Kentucky 40503(US)**
Inventor: **Lederer, James Francis
3158 Beaver Creek Drive
Lexington Kentucky 40502(US)**
Inventor: **Perkins, Donald Bynum
565 Greenfield Drive
Lexington Kentucky 40503(US)**

Representative: **Siccardi, Louis
Compagnie IBM France Département de
Propriété Intellectuelle
F-06610 La Gaude(FR)**

Method and apparatus for processing keystrokes.

A method and apparatus for processing keystrokes, typically entered by an operator at a keyboard (12), in order to supply keystroke information to a printer (14) and a display (13). The keystrokes are processed in a microcomputer system unit (11) to provide keystroke information which is stored in a correction buffer for possible future change or correction, and in a display storage location, such as a video RAM. Substantially simultaneously with the processing of keystrokes for storage in the correction buffer and in the video RAM, keystrokes are also processed for storage of keystroke information in a microcomputer system unit printer buffer. The keystroke information in the buffer is subsequently supplied to the printer in a manner to avoid significantly slowing the processing of keystrokes for storage in the correction buffer and in the video RAM.

FIG. 1

# METHOD AND APPARATUS FOR PROCESSING KEYSTROKES

Background of the Invention

This invention relates generally to systems for processing keystrokes to provide keystroke information to a printer, and more particularly concerns such a system which also supplies keystroke information to a display.

There are a number of types of systems which process incoming keystrokes to produce information to be supplied to a display and to a printer. In an electronic typewriter arrangement, for example, there are typically provided a keyboard, a single line display, a printer portion, and an operating system to interface among the keyboard, the display, and the printer. Usually, the display, the printer assembly, and the operating system circuitry are contained in a single unit.

As another example, a personal computer system may be operated under software control to function as an electronic typewriter. One such system includes a microcomputer system unit, a keyboard, a display, and a printer.

In the first-mentioned electronic typewriter system, an operator depresses keys on the keyboard, and keystrokes are coupled to a microprocessor-based operating system in the typewriter. The operating system operates under program control to provide information to the display and to the printer assembly and has associated memory for storage and retrieval of keystroke information developed from the keystrokes. In such an electronic typewriter system, keystrokes are processed to place suitable keystroke information in a storage location known as a correction buffer, which contains, for example, keystroke information related to a single line of alphanumeric text. The keystroke information remains in the correction buffer so that the operator can enter, via the keyboard, modifications to the stored line of text such as deletions of characters or changes to characters. When a keystroke is processed, if it is a suitable character or other indicium which is to be displayed on the display, appropriate keystroke information is not only placed in the correction buffer but (perhaps different) keystroke information is also placed in a display storage location.

Finally, in the course of processing a keystroke, the operating system sends appropriate keystroke information to the printer portion of the electronic typewriter. In the case of a keystroke representative of the letter "A", for example, the keystroke is processed to place the "A" in the correction buffer and in the display, and the keystroke is also processed to be placed on paper by sending the appropriate keystroke information to the printer portion of the typewriter. Typically, a cursor on the display indicates the current position at which the next character entered by the operator through the keyboard will be displayed, printed, and stored in the correction buffer.

Some keystrokes result in the display and printing of characters, while other keystrokes are only processed to provide keystroke information for the printer assembly. Such a "printer" keystroke is a paper movement command of some type, for example. In any event, each keystroke is processed by the electronic typewriter, and in most cases keystroke information is supplied to the printer, as well as the display memory and the correction buffer.

An operator is typically capable of keying in information at the keyboard at a faster rate than the keystrokes can be processed by the operating system in the electronic typewriter. Therefore, if no provision were made to accommodate this keying speed, keystrokes would be lost because the operating system would not be able to receive and process subsequent keystrokes until a first keystroke was processed.

To avoid this loss of keystrokes, prior systems have incorporated a keystroke buffer in a portion of the operating system memory. The keystrokes from the keyboard are received in the keystroke buffer substantially instantaneously, and then processed from the keystroke buffer as quickly as possible. In such a system, the operator is allowed to type ahead of both the display and the printer, which will then catch up to the operator when the operator pauses.

However, if the operator makes a mistake and wishes to erase one or more characters and to retype a word, the operator must wait for all of the buffered keystrokes to be processed. This wait is necessary so that the already-entered keystrokes appear on the display (and on paper) in order that the operator can see what has been entered, to make a proper correction. After waiting for the printer to finish typing the word, the operator then performs one erase at a time, before subsequently retyping the word. It is the general aim of the present invention to improve the responsiveness of the operator interface in systems of the foregoing type, to permit more efficient entry of keystrokes by an operator.

Summary of the Invention

In accordance with one aspect of the invention.
this objective has been accomplished by utilizing
an additional keystroke information storage location
which is accessible to the operating system.

In one embodiment of the invention, illustrated
in the form of a personal computer system, the
additional keystroke information storage location
takes the form of a system printer buffer in which
keystroke information, for ultimate transmission to a
printer, is temporarily stored. In this way, when a
keystroke is received, keystroke information is not
only stored in a correction buffer and a display
memory, but also in the system printer buffer. This
avoids printer-associated delays in the processing
of each keystroke so that keystrokes can be processed substantially as quickly as an operator can
enter the keystrokes.

As a result of the foregoing employment of a
system printer buffer, the display accurately reflects the keystrokes entered by the operator. Keystroke information for the printer is coupled from
the system printer buffer to the printer as time
permits, as a subsidiary function to the processing
of keystrokes. The operator is permitted to key in
keystrokes as quickly as desired, with the display
maintaining the proper keystroke information, and
permitting virtual instantaneous erasure and replacement of characters from the keyboard (from
the standpoint of what is on the display). The
requisite erasure or replacement keystroke information is, of course, entered in the correction buffer,as appropriate, and in the system printer buffer
as required.

With printer keystroke information stored in the
system printer buffer, prior to its transmission to
the printer apparatus, operations may also be performed on this information by the operating system. For example, a series of printer movement
commands could be consolidated to effect more
efficient printer movement.

Other objects and advantages of the invention,
and the manner of their implementation, will become apparent upon reading the following detailed
description and upon reference to the drawings, in
which:

Brief Description of the Drawings

Fig. 1 is a block diagram of a personal
computer system in which the present invention is
implemented;

Fig. 2 is a diagrammatic flowchart of software implementable on the personal computer system of Fig. 1 embodying a typewriter emulation
system;

Fig. 3 is a diagrammatic flowchart of a portion of one of the blocks of Fig. 2; and

Fig. 4 is a diagrammatic flowchart of an
alternate form of operation of a typewriter simulation system.

Detailed Description

While the invention is susceptible to various
modifications and alternative forms, a specific embodiment thereof has been shown by way of example in the drawings and will herein be described in
detail. It should be understood, however, that it is
not intended to limit the invention to the particular
form disclosed, but, on the contrary, the intention is
to cover all modifications, equivalents and alternatives falling within the spirit and scope of the
invention as defined by the appended claims.

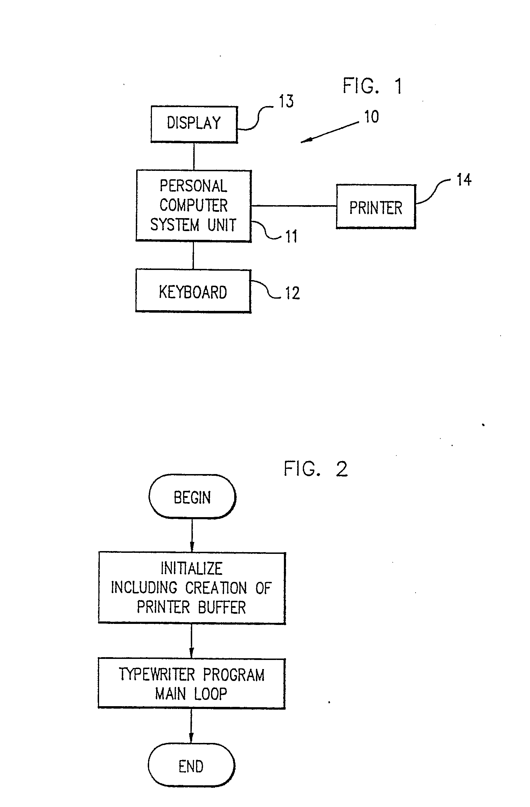

Turning first to Fig. 1, a personal computer
system 10 includes a system unit 11 coupled to a
keyboard 12, a display 13, and a printer 14. In one
form of the present invention, the personal computer system 10 comprises a personal computer
having a system unit based upon the Intel 8086
family of microprocessors. The system unit 11 includes a disk drive for loading application software
and operating system software and suitable interfaces to the display 13 and the printer 14. The
system unit 11 is coupled to the keyboard by a
standard bidirectional serial interface and to the
printer 14 by a standard parallel printer interface.
The system unit 11 is under the control of a disk
operating system (DOS) and basic input/output
system (BIOS), which define a video RAM memory
segment for display information.

In the present instance, the system unit 11 is
operated under the control of an application program which simulates the operation of an electronic
typewriter. This software defines memory locations
comprising a correction buffer for storing a current
line of text. In a "key-to-print" mode, as keystrokes
are entered at the keyboard 12, the keystrokes are
coupled to the system unit 11 and processed. As
keystrokes from the keyboard 12 are processed,
appropriate characters are displayed on the display
13 and printed on paper by the printer 14. The
system is also operable in a "delay print" mode in
which characters are displayed in response to keystrokes as the keystrokes are entered at the keyboard, but printing is performed on a line-by-line
basis.

In accordance with the invention, the application program sets aside a system printer buffer
storage location for use in processing keystrokes.
In "key-to-print" mode. keystroke information for
the printer is stored in the system printer buffer
during keystroke processing for subsequent transmission to the printer.

As shown in Fig. 2, when the typewriter application program is executed, in the initialization process, a printer buffer memory space is set aside. The typewriter program then executes in its main loop until the operator exits from the program.

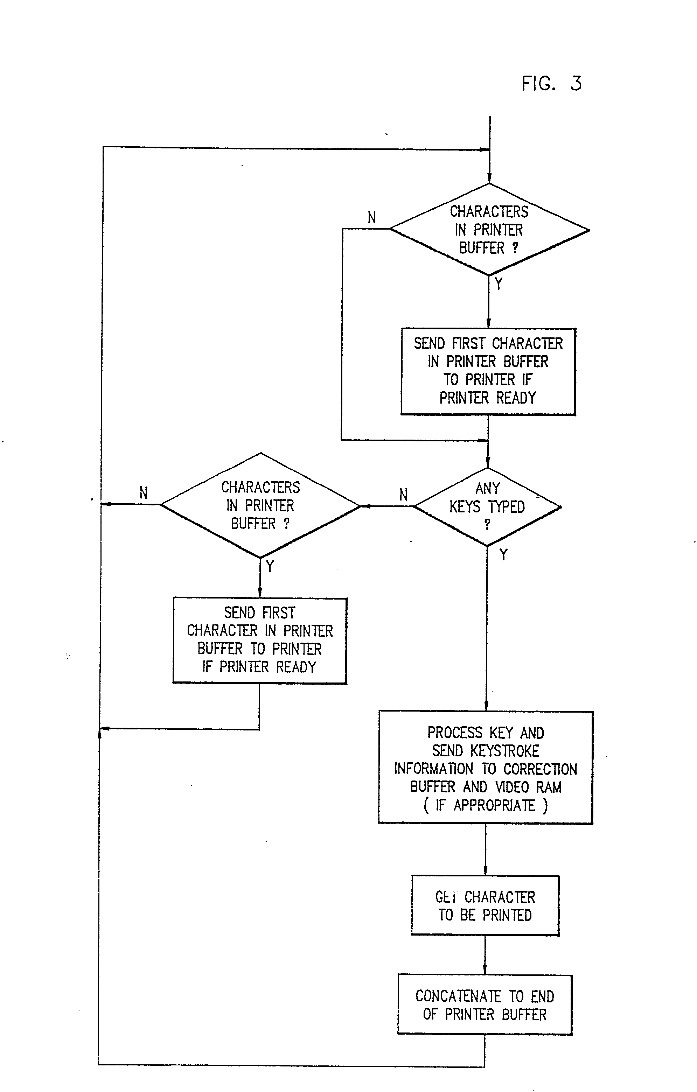

With reference now to Fig. 3, within the typewriter program main loop, a predominant activity in the "key-to-print" mode is an idle loop in which keystrokes from the keyboard are processed and keystroke information placed in the system printer buffer for subsequent transmission to the printer.

In executing the typewriter program idle loop, the processor determines if there are characters (or other keystroke information) in the printer buffer. If there are one or more characters or other items of keystroke information, the first character in the printer buffer is sent to the printer, if the printer is ready to receive an item of keystroke information (hereinafter, referred to simply as a character). If the printer is busy (for example, processing a previously-sent character), no keystroke information is sent to the printer.

The processor next determines if any keys have been typed. If a key has not been typed, the processor again checks for characters in the printer buffer and sends the first character (if any) to the printer if the printer is ready to receive a character. In either event, the processor then returns to the beginning of the idle loop.

If a key has been typed, the processor processes the keystroke and sends the appropriate keystroke information to the correction buffer and the display memory. An alphanumeric character to be displayed and printed, for example, is sent to both the correction buffer and the video RAM by the processor in this step. The processor next gets a character to be printed (or a printer command to be sent to the printer) and adds this character or command to the end of the printer buffer.

As can be seen from the foregoing, as each keystroke is processed, keystroke information for the printer is stored in a system printer buffer and subsequently supplied from the buffer to the printer in a manner that supplying the keystroke information from the buffer does not significantly impede the processing of keystrokes. Thus, keystrokes are relatively quickly displayed in the display, regardless of the activity level of the printer.

The contents of the system printer buffer are also accessible for further processing, if appropriate. One implementation of further processing of keystroke information in the system printer buffer is the adjustment of printhead carrier movement commands which are sequentially supplied to the buffer.

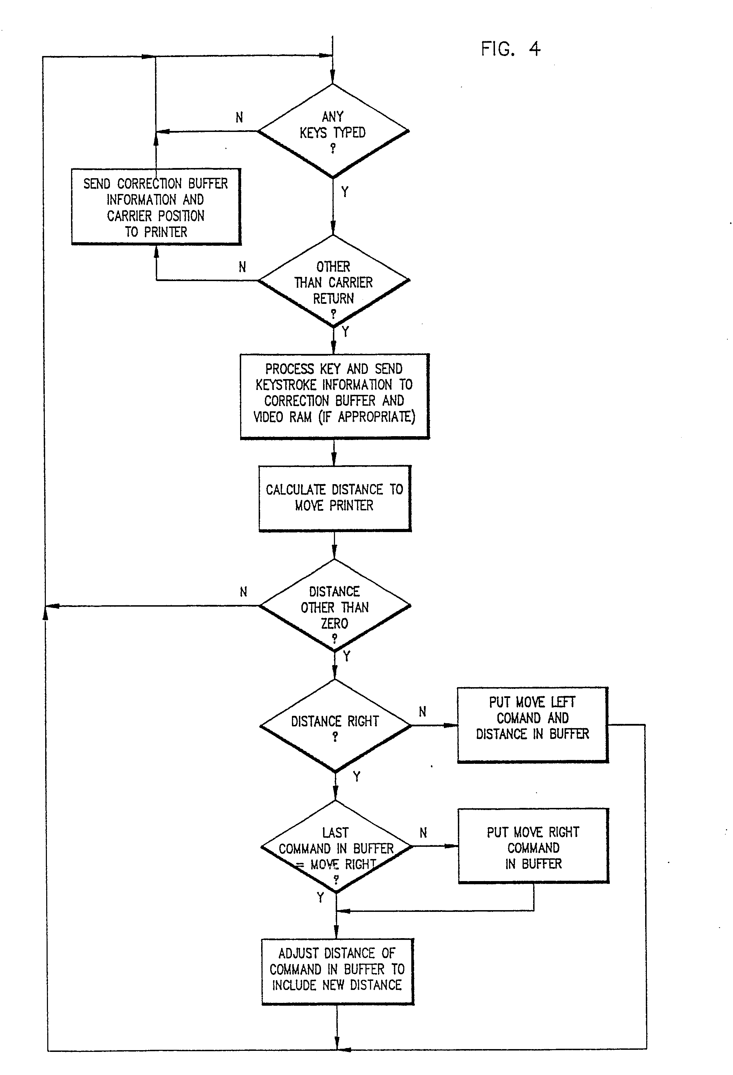

An example of such further processing, as illustrated in Fig. 4, occurs within the "delay print" mode of operation. In this instance, characters and the like entered by keystrokes are stored in the correction buffer and the video RAM as a line of text is typed. When a recognized end-of-line character is keyed (such as a "carrier return"), the contents of the correction buffer are sent to the printer, and the contents of the video RAM are removed. In the delay interval in the "delay print" mode, it is sometimes desirable to "shadow" the printhead position relative to the paper in correlation with the current character location on the display and in the correction buffer. Such a capability is of value in filling in printed forms, for example.

When shadowing, in the "delay print" mode, the idle loop within the typewriter program main loop is generally as illustrated in Fig. 4. As will be described, in addition to shadowing, the program sequence illustrated in Fig. 4 provides for the modification of keystroke information already stored in the system printer buffer for the shadowing operation.

In executing the idle loop for "delay print" mode including shadowing, the processor first checks to determine if a key has been typed. If not, the processor returns and continues to loop. If a key has been typed, the processor determines if the key is a carrier return. If so, the correction buffer contents are processed, to form a printer command sequence, and sent to the printer. The printer also receives a printhead carrier position signal, typically to position the carrier at the left margin for the next line of print.

If the keystroke was other than a carrier return key, the key is processed and appropriate keystroke information (if any) is sent to the correction buffer and the video RAM.

The system printer buffer is now used to store carrier movement commands for each keystroke having an associated carrier movement. The distance for the carrier to move depends upon such factors as the character pitch, or in the case of proportional spacing, the particular character selected. In addition, carrier movement commands include those resulting from tabs, spaces, backspaces, etc.

After the processor has determined the distance that the printhead carrier must be moved, based upon the processed keystroke, the processor then determines if the absolute value of the distance for the carrier to move is greater than zero. If not, the processor returns to check for another key. If a non-zero movement is called for, the processor determines if the distance is a movement to the right (on the paper). In the present instance, a distance to the right is a positive number, and a distance to the left is a negative number.

If the printer carrier is to be moved to the left, a "move left" command and the appropriate associated distance amount are placed in the system printer buffer. and the processor returns to the beginning of the loop. In the present system, movement to the left occurs infrequently enough that the system printer buffer information is not further processed in implementing leftward movements of the printhead carrier.

If the carrier movement is to the right, the processor then checks to see if the last command stored in the system printer buffer was also a "move right" command. If not, the processor inserts a "move right" command at the end of the system printer buffer.

The processor then adjusts the distance associated with the "move right" command (either just inserted or previously present) at the end of the buffer to include the new distance just-calculated for the most recent keystroke. If, in the preceding step, the processor has just put a "move right" command in the buffer, then the distance amount will merely be equal to the most recently calculated distance. If, however, a previous "move right" command is present in the buffer, the distance just-calculated is added to the previously stored distance. The processor then returns to the beginning of the loop.

In implementing the foregoing modification to the system printer buffer during "shadowing", only keystroke information not yet sent to the printer can be operated upon. Once a "move" command has been sent to the printer, it is no longer recognized as a command "in the buffer", whose movement distance can be adjusted. Instead, the processor must put a new "move" command in the buffer.

In the foregoing typewriter software system descriptions, the typewriter application software effects the reading of keystrokes from the keyboard and the writing of keystroke information to the video RAM, for example, by interfacing with the system disk operating system (DOS), including BIOS (Basic Input/Output System). While the invention has been described in connection with a particular personal computer system which utilizes DOS and BIOS in a certain manner, it should be understood that the principles of the invention are applicable without regard to the specific hardware and operating system software implementation. For example, the implementation details of making keystrokes available to the application software, providing keystroke information to the display, and the form of the correction buffer do not affect the practice of the invention.

## Claims

1. A method of processing keystrokes to supply keystroke information to a printer and a display, comprising the steps of:

processing each keystroke to store keystroke information for correction and to store keystroke information for the display;

substantially simultaneously processing each keystroke to store keystroke information for the printer in a buffer whose contents are accessible for further processing; and

subsequently supplying keystroke information from the buffer to the printer, so that supplying keystroke information from the buffer to the printer does not significantly impede the processing of keystrokes.

2. The method of claim 1 in which the step of processing each keystroke to store keystroke information for correction and for the display, comprises the substeps of:

storing keystroke information in a correction buffer; and

storing keystroke information in a display storage location.

3. The method of claim 2 in which the keystrokes are processed in preference to supplying keystroke information from the buffer to the printer.

4. The method of claim 1 which further comprises, before the step of subsequently supplying keystroke information from the buffer to the printer, the additional step of:

processing keystroke information in the buffer.

5. A system for processing keystrokes to supply keystroke information to a printer and a display comprising:

means for processing each keystroke to store keystroke information for correction and to store keystroke information for a display;

means for substantially simultaneously processing each keystroke to store keystroke information for a printer in a buffer whose contents are accessible for further processing; and

means for subsequently supplying keystroke information from the buffer to a printer.

6. The system of claim 5 further comprising means for processing keystroke information in the buffer before said keystroke information is supplied from the buffer to a printer.

FIG. 1

DISPLAY 13

10

PERSONAL COMPUTER SYSTEM UNIT 11

PRINTER 14

KEYBOARD 12

FIG. 2

BEGIN

INITIALIZE INCLUDING CREATION OF PRINTER BUFFER

TYPEWRITER PROGRAM MAIN LOOP

END

FIG. 3

CHARACTERS IN PRINTER BUFFER ?

N

Y

SEND FIRST CHARACTER IN PRINTER BUFFER TO PRINTER IF PRINTER READY

CHARACTERS IN PRINTER BUFFER ?

N

ANY KEYS TYPED ?

N

Y

Y

SEND FIRST CHARACTER IN PRINTER BUFFER TO PRINTER IF PRINTER READY

PROCESS KEY AND SEND KEYSTROKE INFORMATION TO CORRECTION BUFFER AND VIDEO RAM ( IF APPROPRIATE )

GET CHARACTER TO BE PRINTED

CONCATENATE TO END OF PRINTER BUFFER

FIG. 4